(19) Europäisches Patentamt
European Patent Office
Office européen des brevets

(11) EP 3 252 082 A1

(12) EUROPEAN PATENT APPLICATION

(43) Date of publication:
06.12.2017 Bulletin 2017/49

(51) Int Cl.:
C08B 37/00 (2006.01)  C08B 37/08 (2006.01)
C08L 5/00 (2006.01)  C08J 3/075 (2006.01)

(21) Application number: 16172254.1

(22) Date of filing: 31.05.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Galderma S.A.
6330 Cham (CH)

(72) Inventors:
• OLSSON, Johan
167 33 Bromma (SE)
• HARRIS, Craig Steven
06410 Biot (FR)

(74) Representative: Awapatent AB
P.O. Box 45086
104 30 Stockholm (SE)

(54) METHOD FOR DEACETYLATION OF BIOPOLYMERS

(57) A method for at least partial deacetylation of a biopolymer comprising acetyl groups, comprising:
a1) providing a biopolymer comprising acetyl groups;
a2) reacting the biopolymer comprising acetyl groups with hydroxylamine (NH$_2$OH) at a temperature of 100 °C or less for 2-200 hours to form an at least partially deacetylated biopolymer; and
a3) recovering the at least partially deacetylated biopolymer.

Fig. 1

EP 3 252 082 A1

**Description**

Technical field of the invention

The present invention relates to the field of hydrogels containing crosslinked polysaccharides and the use of such hydrogels in medical and/or cosmetic applications. More specifically, the present invention is concerned with hydrogels made of crosslinked glycosaminoglycans, particularly crosslinked hyaluronic acid, chondroitin or chondroitin sulfate.

Background of the invention

Water-absorbing gels, or hydrogels, are widely used in the biomedical field. They are generally prepared by chemical crosslinking of polymers to infinite networks. While many polysaccharides absorb water until they are completely dissolved, crosslinked gels of the same polysaccharides can typically absorb a certain amount of water until they are saturated, i.e. they have a finite liquid retention capacity, or swelling degree.

Hyaluronic acid, chondroitin and chondroitin sulfate are well-known biocompatible polymers. They are naturally occurring polysaccharides belonging to the group of glycosaminoglycans (GAGs). All GAGs are negatively charged heteropolysaccharide chains which have a capacity to absorb large amounts of water.

Hyaluronic acid (HA) is one of the most widely used biocompatible polymers for medical and cosmetic use. HA is a naturally occurring polysaccharide belonging to the group of glycosaminoglycans (GAGs). Hyaluronic acid and products derived from hyaluronic acid are widely used in the biomedical and cosmetic fields, for instance during viscosurgery and as a dermal filler. Chondroitin sulfate (CS) is a highly abundant GAG found in the connective tissues of mammals where it, together with other sulfated GAGs, is bound to proteins as part proteoglycans. It has previously been shown that hydrogels containing CS successfully can be used in biomedical applications due to their resemblance to the natural extra cellular matrix (Lauder, R.M., Complement Ther Med 17: 56-62, 2009). Chondroitin sulfate is also used in the treatment of osteoarthritis, e.g. as a dietary supplement.

Crosslinking of the glycosaminoglycans prolongs the duration of the degradable polymers that make up the network, which is useful in may application. However, the crosslinking can also reduce the native properties of the glycosaminoglycans. Hence, it is typically desired to maintain a low degree of modification by efficient crosslinking to conserve the native properties and effects of the glycosaminoglycan itself.

Summary of the invention

It is an object of the present invention to provide a hydrogel having a glycosaminoglycan (GAG) as the swellable polymer.

It is a further object of the present invention to provide a method for crosslinking GAG molecules resulting in a hydrogel product based entirely on carbohydrate type structures.

It is also an object of the present invention to provide a method for preparing hydrogels of GAG molecules by mild and efficient routes.

It is also an object of the present invention to provide a method for at least partial deacetylation of a biopolymer comprising N-acetyl groups by mild and efficient routes.

According to aspects illustrated herein, there is provided a method for at least partial deacetylation of a biopolymer comprising acetyl groups, comprising:

a1) providing a biopolymer comprising acetyl groups ($NH_2OH$);
a2) reacting the biopolymer comprising acetyl groups with hydroxylamine at a temperature of 100 °C or less for 2-200 hours to form an at least partially deacetylated biopolymer; and
a3) recovering the at least partially deacetylated biopolymer.

The present invention is based on the inventive realization that hydroxylamine ($NH_2OH$) can advantageously be used for deacetylation of biopolymer comprising N-acetyl groups under mild reaction conditions. Thus, according to embodiments, the biopolymer comprises N-acetyl groups and the at least partially deacetylated biopolymer formed in step a2) is an at least partially N-deacetylated biopolymer.

By the term "at least partial deacetylation" as used herein as used herein with reference to the biopolymer, we mean that at least some of the N-acetyl groups of a biopolymer comprising N-acetyl groups are cleaved off, resulting in the formation of free amine groups in the biopolymer. By the term "at least partial deacetylation" as used herein, we mean that a significant portion of the N-acetyl groups of the biopolymer, particularly at least 1 %, preferably at least 2 %, at least 3 %, at least 4 %, at least 5 %, of the N-acetyl groups of the biopolymer are converted to free amine groups.

By the term "at least partially deacetylated" as used herein with reference to the biopolymer, we mean a biopolymer comprising N-acetyl groups in which at least some of the N-acetyl groups have been cleaved off, resulting in the formation of free amine groups in the biopolymer. By "at least partially deacetylated" as used herein, we mean that a significant portion of the N-acetyl groups of the biopolymer, particularly at least 1 %, preferably at least 2 %, at least 3 %, at least 4 %, at least 5 %, of the N-acetyl groups of the biopolymer have been converted to free amine groups.

The deacetylated biopolymers comprise free amine groups, and may be useful for various applications, e.g. for crosslinking, conjugation or grafting reactions, requiring the presence of free amine groups. Particularly, deacetylated biopolymers, for example deacetylated glycosaminoglycans, can be useful for preparing crosslinked biopolymers, such as crosslinked lycosaminoglycans without the use of additional crosslinkers that could reduce the native properties of the glycosaminoglycans. In other words, deacetylated biopolymers can be used for preparing crosslinked biopolymers based entirely on biopolymer structures, without additional non-biopolymer crosslinkers.

The inventive deacetylation method involves a hydroxylaminolysis reaction. Using hydroxylamine for deacetylation has been found to allow for N-deacetylation under mild conditions resulting in only minor degradation of the polymeric backbone of sensitive polysaccharides such as HA. Using hydroxylamine for deacetylation thus allows for production of deacetylated HA with retained high molecular weight. This is in contrast to previously known methods, such as deacetylation using hydrazine or NaOH as the deacetylating agent, where high degrees of deacetylation have been inevitably accompanied by severe degradation of the polymeric backbone.

The biopolymer may be a modified, e.g. branched or crosslinked, biopolymer. According to certain embodiments the biopolymer is a crosslinked biopolymer. According to specific embodiments the biopolymer is a biopolymer gel.

According to some embodiments, the biopolymer comprising acetyl groups used as the starting material in the deacetylation method is a polysaccharide. According to some embodiments, the biopolymer comprising acetyl groups is a glycosaminoglycan. According to some embodiments, the biopolymer comprising acetyl groups is selected from the group consisting of sulfated or non-sulfated glycosaminoglycans such as hyaluronan, chondroitin, chondroitin sulphate, heparan sulphate, heparosan, heparin, dermatan sulphate and keratan sulphate, preferably hyaluronic acid, chondroitin and chondroitin sulfate, and mixtures thereof. According to some embodiments, the biopolymer comprising acetyl groups is hyaluronic acid.

Hyaluronic acid is one of the most widely used biocompatible polymers for medical use. Hyaluronic acid and the other GAGs are negatively charged heteropolysaccharide chains which have a capacity to absorb large amounts of water. Hyaluronic acid and products derived from hyaluronic acid are widely used in the biomedical and cosmetic fields, for instance during viscosurgery and as a dermal filler.

Water-absorbing gels, or hydrogels, are widely used in the biomedical field. They are generally prepared by chemical crosslinking of polymers to infinite networks. While native hyaluronic acid and certain crosslinked hyaluronic acid products absorb water until they are completely dissolved, crosslinked hyaluronic acid gels typically absorb a certain amount of water until they are saturated, i.e. they have a finite liquid retention capacity, or swelling degree.

Since hyaluronic acid is present with identical chemical structure except for its molecular mass in most living organisms, it gives a minimum of foreign body reactions and allows for advanced medical uses. Crosslinking and/or other modifications of the hyaluronic acid molecule is typically necessary to improve its duration *in vivo*. Furthermore, such modifications affect the liquid retention capacity of the hyaluronic acid molecule. As a consequence thereof, hyaluronic acid has been the subject of many modification attempts.

Polysaccharides, and particularly glycosaminoglycans such as hyaluronic acid, chondroitin and chondroitin sulfate, are often prone to degradation of the backbone under harsh reaction conditions (e.g. very high or low pH, or high temperatures). The inventive method is therefore especially useful for deacetylation of such polysaccharides.

The inventive deacetylation method is useful for obtaining at least partially deacetylated biopolymers in which a significant portion of the molecular weight of the starting material is retained.

According to some embodiments, the weight average molecular weight of the recovered at least partially deacetylated biopolymer is at least 10%, preferably at least 20%, more preferably at least 25%, of the weight average molecular weight of the biopolymer comprising acetyl groups in step a1). The weight average molecular weight of the recovered at least partially deacetylated biopolymer may also be higher, such as at least 30%, 40%, 50%, 60%, 70%, 80% or 90% of the weight average molecular weight of the biopolymer comprising acetyl groups in step a1).

According to some embodiments, the biopolymer comprising acetyl groups has a weight average molecular weight of at least 10 kDa. According to some embodiments, the biopolymer comprising acetyl groups has a weight average molecular weight of at least 100 kDa, of at least 500 kDa, of at least 750 kDa, or of at least 1 MDa. According to some embodiments, the biopolymer comprising acetyl groups has a weight average molecular weight in the range of 1 - 5 MDa, preferably in the range of 2 - 4 MDa.

According to some embodiments, the recovered at least partially deacetylated biopolymer has a weight average molecular weight of at least 10 kDa. According to some embodiments, the recovered at least partially deacetylated biopolymer has a weight average molecular weight of at least 100 kDa, of at least 500 kDa, of at least 750 kDa, or of at least 1 MDa. According to some embodiments, the recovered biopolymer comprising acetyl groups has a weight average molecular weight in the range of 0.1 - 5 MDa, preferably in the range of 0.5 - 5 MDa or 0.5 - 3 MDa.

The deacetylation method of the present disclosure is also applicable to shorter biopolymers, or biooligomers, such as dimers, trimers, tetramers, etc.

According to some embodiments, the biopolymer comprising acetyl groups is an oligobiopolymer which has a weight average molecular weight in the range of 0.3 - 10 kDa.

According to some embodiments, the recovered at least partially deacetylated oligobiopolymer has a weight average molecular weight in the range of 0.3 - 10 kDa.

The biopolymer comprising acetyl groups used as the starting material in the deacetylation method is typically fully, or almost fully, acetylated. By the term "fully acetylated" as used herein with reference to the biopolymer, we mean a biopolymer in which all, or substantially all, free amine groups have been converted to N-acetyl groups. In other words, the "fully acetylated" biopolymer comprises no, or substantially no, free amine groups. According to some embodiments, the biopolymer comprising acetyl groups used as the starting material in step a1) has a degree of acetylation in the range of 98-100 %.

According to some embodiments, the recovered at least partially deacetylated biopolymer has a degree of acetylation at least 1 % less, preferably at least 2% less, preferably at least 3% less, preferably at least 4% less, preferably at least 5% less, than that of the biopolymer comprising acetyl groups in step a1). In other words, the recovered at least partially deacetylated biopolymer may have a degree of acetylation of less than 99%, preferably less than 98%, less than 97%, less than 97%, less than 96%, less than 95%, less than 94% or less than 93%. The recovered at least partially deacetylated biopolymer may also have a degree of acetylation at least 10% less, at least 15% less, at least 20% less, at least 30% less, at least 40% less, or at least 50%, less than that of the biopolymer comprising acetyl groups in step a1).

The deacetylation process may preferably be performed in water or aqueous solution. Thus according to some embodiments, step a1) comprises contacting a biopolymer comprising acetyl groups with hydroxylamine in water so that an aqueous mixture or solution of the biopolymer and the hydroxylamine is formed. In some embodiments, the concentration of hydroxylamine is at least 10 % by weight, preferably at least 20 % by weight, preferably at least 30 % by weight of the aqueous mixture or solution. A higher concentration of hydroxylamine may increase the reaction rate.

Hydroxylamine is often provided in the form of an aqueous solution, typically at a concentration of 50% by weight. In some embodiments, the biopolymer may be mixed and dissolved directly in the aqueous solution of hydroxylamine, optionally diluted. Alternatively, a solid salt of hydroxylamine, for example hydroxylamine hydrochloride or hydroxylamine sulfate, can be dissolved in an aqueous solution of the biopolymer. Adding a salt of hydroxylamine, and covering the salt to hydroxylamine, may be done as an alternative or as a complement to dissolving the biopolymer comprising acetyl groups in an aqueous solution of hydroxylamine.

According to some embodiments, the biopolymer comprising acetyl groups is dissolved in an aqueous solution of hydroxylamine in step a1). According to some embodiments, a salt of hydroxylamine is dissolved in an aqueous solution of a biopolymer comprising acetyl groups in step a1). According to some embodiments, the biopolymer comprising acetyl groups is dissolved in an aqueous solution of hydroxylamine, and a salt of hydroxylamine is dissolved in the aqueous solution of biopolymer comprising acetyl groups is hydroxylamine.

The reaction temperature in step a2) is preferably selected so as not to cause excessive degradation of the biopolymer. According to some embodiments, the temperature in step a2) is in the range of 10-90 °C, preferably 20-80 °C, preferably 30-70 °C, preferably 30-50 °C.

The reaction time in step a2) depends on the desired degree of deacetylation. The reaction time is preferably selected so as not to cause excessive degradation of the biopolymer and is also dependent on the temperature and pH. According to some embodiments, the reaction time in step a2) is 2-150 hours, preferably 5-150 hours, preferably 5-100 hours.

The pH in step a2) is preferably selected so as not to cause excessive degradation of the biopolymer. According to some embodiments, the reaction in step a2) is performed at a pH value in the range of 4-12. According to some embodiments, the reaction in step a2) is performed at a pH value in the range of 9-11. According to some embodiments, the reaction in step a2) is performed at a pH value in the range of 4-9, preferably in the range of 6-9, preferably in the range of 7-8. A lower pH is typically preferred in order to avoid degradation of the biopolymer. Thus, according to some embodiments, the pH of the reaction is lowered to a value in the range of 4-9, preferably in the range of 6-9 preferably in the range of 7-8, by addition of a pH reducing agent. The pH reducing agent may for example be selected from the group consisting of mineral acids, organic acids and pH reducing salts, and combinations thereof. In a preferred embodiment, the pH reducing agent comprises hydroxylamine hydrochloride or hydroxylamine sulfate, preferably hydroxylamine hydrochloride.

According to some embodiments, the reaction in step a2) is performed in inert atmosphere and/or in darkness.

The products obtained by the deacetylation method described above may have properties that differ significantly from corresponding products obtained by other known deacetylation methods. According to other aspects illustrated herein, there is provided an at least partially deacetylated glycosaminoglycan obtained by the method described above. The partially deacetylated glycosaminoglycan obtained by the method described above have a combination of a reduced degree of acetylation and a retained high weight average molecular weight.

According to other aspects illustrated herein, there is provided a deacetylated glycosaminoglycan having a degree of acetylation of 99% or less, preferably 98% or less, preferably 97% or less, preferably 96% or less, and a weight average molecular weight of 0.1 MDa or more, preferably 0.3 MDa or more, preferably 0.5 MDa or more.

The present invention is based on the inventive realization that hydroxylamine ($NH_2OH$) can advantageously be used for deacetylation of biopolymer comprising N-acetyl groups under mild reaction conditions. Thus according to other aspects illustrated herein, there is provided the use of hydroxylamine to at least partially deacetylate a biopolymer comprising acetyl groups. The use may be further characterized as described above with reference to the deacetylation method.

According to other aspects illustrated herein, there is provided a method of preparing a hydrogel product comprising crosslinked glycosaminoglycan molecules, said method comprising the steps of:

a) providing a solution comprising an at least partially deacetylated glycosaminoglycan and optionally a second glycosaminoglycan;
b) activating carboxyl groups on the at least partially deacetylated glycosaminoglycan and/or the optional second glycosaminoglycan with a coupling agent, to form activated glycosaminoglycans;
c) crosslinking the activated glycosaminoglycans via their activated carboxyl groups using amino groups of the at least partially deacetylated glycosaminoglycans to provide glycosaminoglycans crosslinked by amide bonds.

According to some embodiments, the at least partially deacetylated glycosaminoglycan employed in step a) of the method of preparing a hydrogel product is a deacetylated glycosaminoglycan having a degree of acetylation of 99% or less, preferably 98% or less, preferably 97% or less, preferably 96% or less, and a weight average molecular weight of 0.1 MDa or more, preferably 0.3 MDa or more, preferably 0.5 MDa or more. According to some embodiments, the at least partially deacetylated glycosaminoglycan employed in step a) of the method of preparing a hydrogel product is obtained by the deacetylation methods described above.

According to some embodiments, the at least partially deacetylated glycosaminoglycan employed in step a) of the method of preparing a hydrogel product is a deacetylated glycosaminoglycan selected from the group consisting of deacetylated hyaluronic acid, deacetylated chondroitin and deacetylated chondroitin sulfate, and mixtures thereof. Preferably, the at least partially deacetylated glycosaminoglycan employed in step a) of the method of preparing a hydrogel product is deacetylated hyaluronic acid.

According to some embodiments, the optional second glycosaminoglycan employed in step a) of the method of preparing a hydrogel product is a glycosaminoglycan selected from the group consisting of hyaluronic acid, chondroitin and chondroitin sulfate, and mixtures thereof. Preferably, the optional second glycosaminoglycan employed in step a) of the method of preparing a hydrogel product is hyaluronic acid.

The method of preparing a hydrogel product involves crosslinking of glycosaminoglycan molecules by covalent bonds, preferably amide bonds, typically using an activating agent for the carboxyl groups on the glycosaminoglycan molecule backbone and amino groups of an at least partially deacetylated glycosaminoglycan. Crosslinking according to the inventive method can be achieved by mild and efficient routes resulting in high yields with minimal degradation of the glycosaminoglycan molecules.

Crosslinking glycosaminoglycans directly via formation of amide bonds between amino and carboxyl groups present on the glycosaminoglycans provides a hydrogel product based entirely on carbohydrate type structures. This minimizes the disturbance of the crosslinking on the native properties of the glycosaminoglycans.

In some embodiments, the activation step b) and the crosslinking step c) occur simultaneously. In other embodiments, the activation step b) occurs prior to and separately from the crosslinking step c).

In a preferred embodiment, the method further comprises providing particles of the crosslinked glycosaminoglycans, having an average size in the range of 0.01-5 mm, preferably 0.1-0.8 mm.

In one preferred embodiment, the coupling agent of step b) is a peptide coupling reagent. The peptide coupling reagent may be selected from the group consisting of triazine-based coupling reagents, carbodiimide coupling reagents, imidazolium-derived coupling reagents, Oxyma and COMU. A preferred peptide coupling reagent is a triazine-based coupling reagent, including the group consisting of 4-(4,6-dimethoxy-1,3,5-triazin-2-yl)-4-methylmorpholinium chloride (DMTMM) and 2-chloro-4,6-dimethoxy-1,3,5-triazine (CDMT), preferably DMTMM. Another preferred peptide coupling reagent is a carbodiimide coupling reagent, preferably N-(3-dimethylaminopropyl)-N'-ethylcarbodiimide (EDC) combined with N-hydroxysuccinimide (NHS). Another preferred peptide coupling reagent is 2-chloro-1-methylpyridinium iodide (CMPI).

According to other aspects illustrated herein, there is provided a hydrogel product obtained by the inventive method.

According to related aspects, the present disclosure also provides use of the hydrogel product as a medicament, such as in the treatment of soft tissue disorders. There is provided a method of treating a patient suffering from a soft tissue disorder by administering to the patient a therapeutically effective amount of the hydrogel product. There is also provided a method of providing corrective or aesthetic treatment to a patient by administering to the patient a therapeutically effective amount of the hydrogel product.

According to other aspects illustrated herein, there is provided a hydrogel product obtained by the inventive method for use as a medicament.

According to other aspects illustrated herein, there is provided a hydrogel product obtained by the inventive method for use in the treatment of soft tissue disorders.

According to other aspects illustrated herein, there is provided the use of a hydrogel product obtained by the inventive method for the manufacture of a medicament for treatment of soft tissue disorders.

According to other aspects illustrated herein, there is provided a method of treating a patient suffering from a soft tissue disorder by administering to the patient a therapeutically effective amount of a hydrogel product obtained by the inventive method.

According to other aspects illustrated herein, there is provided a method of providing corrective or aesthetic treatment to a patient by administering to the patient a therapeutically effective amount of a hydrogel product obtained by the inventive method.

According to other aspects illustrated herein, there is provided a method of cosmetically treating skin, which comprises administering to the skin a hydrogel product obtained by the inventive method.

Other aspects and preferred embodiments of the present invention will be evident from the following detailed disclosure of the invention and the appended claims.

Brief description of the drawings

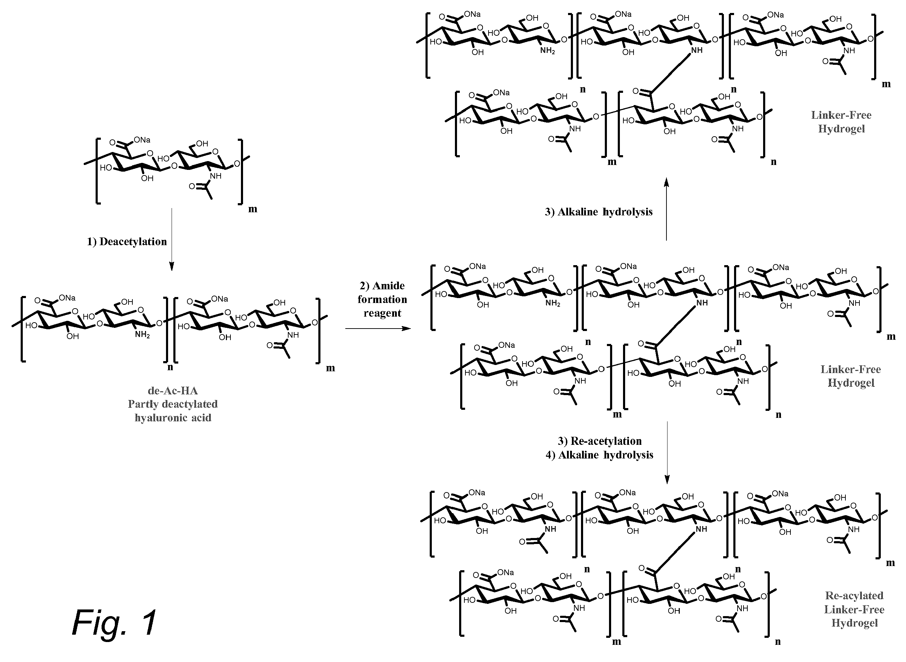

Figure 1 is a reaction scheme illustrating the formation of a crosslinked hyaluronic acid comprising 1) deacetylation of hyaluronic acid to form partially deacetylated hyaluronic acid, 2) crosslinking the partially deacetylated hyaluronic by amide formation, and 3) re-acetylation of free amine groups and alkaline hydrolysis of ester bonds formed during the crosslinking and re-acetylation.

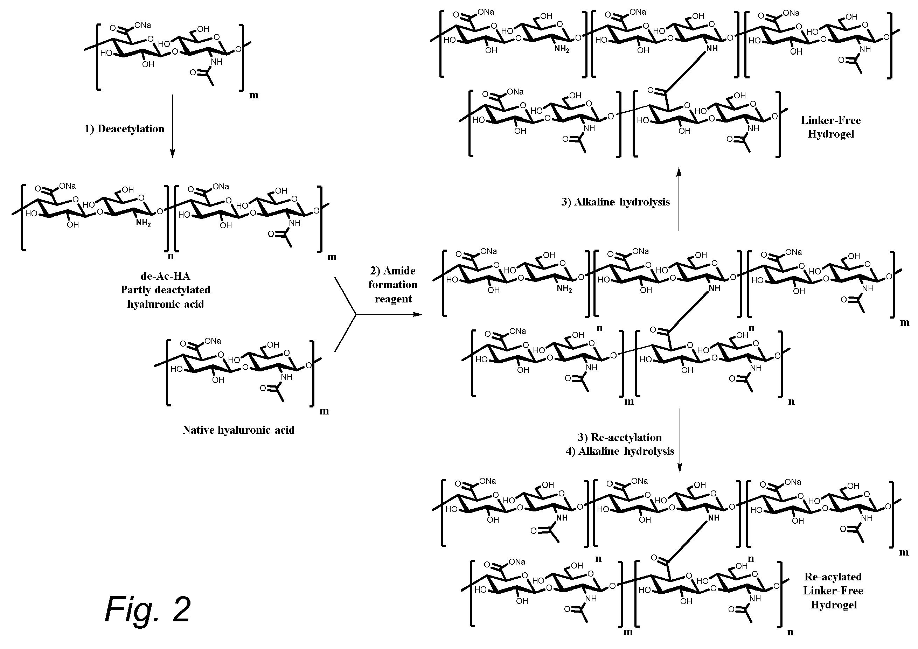

Figure 2 is a reaction scheme illustrating the formation of a crosslinked hyaluronic acid comprising 1) deacetylation of hyaluronic acid to form partially deacetylated hyaluronic acid, 2) crosslinking the partially deacetylated hyaluronic to non-deacetylated hyaluronic acid by amide formation, and 3) re-acetylation of free amine groups and alkaline hydrolysis of ester bonds formed during the crosslinking and re-acetylation.

Detailed description of the invention

The present disclosure provides advantageous processes for preparing hydrogels made of crosslinked glycosaminoglycan (GAG) molecules, the resulting hydrogel products and uses thereof. GAGs are negatively charged heteropolysaccharide chains which have a capacity to absorb large amounts of water. In the hydrogel products according to the disclosure, the crosslinked GAG molecule is the swellable polymer which provides the gel properties. The preparation process described herein is mild to the GAG molecules but provides an efficient crosslinking.

The inventive method of preparing a hydrogel product comprising crosslinked glycosaminoglycan molecules, comprises the steps of:

a) providing a solution comprising an at least partially deacetylated glycosaminoglycan and optionally a second glycosaminoglycan;

b) activating carboxyl groups on the at least partially deacetylated glycosaminoglycan and/or the optional second glycosaminoglycan with a coupling agent, to form activated glycosaminoglycans;

c) crosslinking the activated glycosaminoglycans via their activated carboxyl groups using amino groups of the at least partially deacetylated glycosaminoglycans to provide glycosaminoglycans crosslinked by amide bonds; and optionally the steps

d) acylating residual amine groups of the crosslinked glycosaminoglycans provided in step c) to form acylated crosslinked glycosaminoglycans;
and/or

e) subjecting the crosslinked glycosaminoglycans provided in step c) or d) to alkaline treatment to hydrolyze ester crosslinks formed as byproducts during the amide crosslinking in step c).

The hydrogel products discussed herein are obtained by amide coupling of glycosaminoglycan molecules. Amide coupling using a using a di- or multiamine functional crosslinker together with a coupling agent is an attractive route to preparing crosslinked glycosaminoglycan molecules useful for hydrogel products. Crosslinking can be achieved using a non-carbohydrate based di- or multinucleofile crosslinker, for example hexamethylenediamine (HMDA), or a carbohydrate based di- or multinucleofile crosslinker, for example diaminotrehalose (DATH) together with a glycosaminoglycan. Crosslinking can also be achieved using an at least partially deacetylated glycosaminoglycan, either alone or in combination with a second glycosaminoglycan, whereby the deacetylated glycosaminoglycan itself acts as the di- or multinucleofile crosslinker.

Thus, the present disclosure provides GAG molecule hydrogels by crosslinking in aqueous media using a crosslinker comprising at least two nucleofile functional groups, for example amine groups, capable of forming covalent bonds directly with carboxylic acid groups of GAG molecules by a reaction involving the use of a coupling agent.

The crosslinker comprising at least two nucleofile functional groups may for example be a non-carbohydrate based di- or multinucleofile crosslinker or a carbohydrate based di- or multinucleofile crosslinker.

Carbohydrate based di- or multinucleofile crosslinkers are preferred, since they provide a hydrogel product based entirely on carbohydrate type structures or derivatives thereof, which minimizes the disturbance of the crosslinking on the native properties of the glycosaminoglycans. The crosslinker itself can also contribute to maintained or increased properties of the hydrogel, for example when crosslinking with a structure that correlates to hyaluronic acid or when crosslinking with a structure with high water retention properties.

The carbohydrate based di- or multinucleofile crosslinker may for example be selected from the group consisting of di- or multinucleofile functional di-, tri-, tetra-, oligosaccharides, and polysaccharides.

In a preferred embodiment, the di- or multinucleofile crosslinker is an at least partially deacetylated polysaccharide, i.e. an acetylated polysaccharide which has been at least partially deacetylated to provide a polysaccharide having free amine groups. An at least partially deacetylated glycosaminoglycan, can be crosslinked either alone or in combination with a second glycosaminoglycan, whereby the deacetylated glycosaminoglycan itself acts as the di- or multinucleofile crosslinker.

In a preferred embodiment, the crosslinked GAG is obtained by:

1) crosslinking at least partially deacetylated GAG to partially deacetylated GAG using free amine and carboxylic acid groups present in the at least partially deacetylated GAGs, as shown in Figure 1; or
2) crosslinking at least partially deacetylated GAG to a non-deacetylated GAG using free amine groups present in the at least partially deacetylated GAG and carboxylic acid groups present in the GAG, as shown in Figure 2.

According to some embodiments, the glycosaminoglycan is selected from the group consisting of sulfated or non-sulfated glycosaminoglycans such as hyaluronan, chondroitin, chondroitin sulphate, heparan sulphate, heparosan, heparin, dermatan sulphate and keratan sulphate. According to some embodiments, the glycosaminoglycan is selected from the group consisting of hyaluronic acid, chondroitin and chondroitin sulfate, and mixtures thereof. According to some embodiments, the glycosaminoglycan is hyaluronic acid.

Hyaluronic acid (HA) is one of the most widely used biocompatible polymers for medical and cosmetic use. HA is a naturally occurring polysaccharide belonging to the group of glycosaminoglycans (GAGs). Hyaluronic acid consists of two alternating monosaccharides units, D-N-acetyl glucosamine (GlcNAc) and D-glucuronic acid (GlcA), assembled by $\beta(1\rightarrow3)$ and $\beta(1\rightarrow4)$ glycosidic bonds, respectively. Hyaluronic acid and products derived from hyaluronic acid are widely used in the biomedical and cosmetic fields, for instance during viscosurgery and as a dermal filler.

Unless otherwise specified, the term "hyaluronic acid" encompasses all variants and combinations of variants of hyaluronic acid, hyaluronate or hyaluronan, of various chain lengths and charge states, as well as with various chemical modifications. That is, the term also encompasses the various hyaluronate salts of hyaluronic acid with various counter ions, such as sodium hyaluronate. The hyaluronic acid can be obtained from various sources of animal and non-animal origin. Sources of non-animal origin include yeast and preferably bacteria. The molecular weight of a single hyaluronic acid molecule is typically in the range of 0.1-10 MDa, but other molecular weights are possible.

The term "chondroitin" refers to GAGs having a disaccharide repeating unit consisting of alternating non-sulfated D-glucuronic acid and N-acetyl-D-galactosamine moieties. For avoidance of doubt, the term "chondroitin" does not encompass any form of chondroitin sulfate.

The term "chondroitin sulfate" refers to GAGs having a disaccharide repeating unit consisting of alternating D-glucuronic acid and N-acetyl-D-galactosamine moieties. The sulfate moiety can be present in various different positions. Preferred chondroitin sulfate molecules are chondroitin-4-sulfate and chondroitin-6-sulfate.

The chondroitin molecules can be obtained from various sources of animal and non-animal origin. Sources of non-animal origin include yeast and preferably bacteria. The molecular weight of a single chondroitin molecule is typically in the range of 1-500 kDa, but other molecular weights are possible.

According to some embodiments, the at least partially deacetylated glycosaminoglycan employed in step a) of the method of preparing a hydrogel product is a deacetylated glycosaminoglycan having a degree of acetylation of 99% or less, preferably 98% or less, preferably 97% or less, preferably 96% or less, and a weight average molecular weight of 0.1 MDa or more, preferably 0.5 MDa or more. According to some embodiments, the at least partially deacetylated glycosaminoglycan employed in step a) of the method of preparing a hydrogel product is obtained by the deacetylation methods described above.

According to some embodiments, the at least partially deacetylated glycosaminoglycan employed in step a) of the method of preparing a hydrogel product is a deacetylated glycosaminoglycan selected from the group consisting of deacetylated sulfated or non-sulfated glycosaminoglycans such as deacetylated hyaluronan, deacetylated chondroitin, deacetylated chondroitin sulphate, deacetylated heparan sulphate, deacetylated heparosan, deacetylated heparin, deacetylated dermatan sulphate and deacetylated keratan sulphate. Preferably, the at least partially deacetylated glycosaminoglycan employed in step a) of the method of preparing a hydrogel product is selected from the group consisting of deacetylated hyaluronic acid, deacetylated chondroitin and deacetylated chondroitin sulfate, and mixtures thereof. Preferably, the at least partially deacetylated glycosaminoglycan employed in step a) of the method of preparing a hydrogel product is deacetylated hyaluronic acid.

According to some embodiments, the optional second glycosaminoglycan employed in step a) of the method of preparing a hydrogel product is a glycosaminoglycan selected from the group consisting of sulfated or non-sulfated glycosaminoglycans such as hyaluronan, chondroitin, chondroitin sulphate, heparan sulphate, heparosan, heparin, dermatan sulphate and keratan sulphate. Preferably, the optional second glycosaminoglycan employed in step a) of the method of preparing a hydrogel product is selected from the group consisting of hyaluronic acid, chondroitin and chondroitin sulfate, and mixtures thereof. Preferably, the optional second glycosaminoglycan employed in step a) of the method of preparing a hydrogel product is hyaluronic acid.

Crosslinking glycosaminoglycans directly via formation of amide bonds between amino and carboxyl groups present on the glycosaminoglycans provides a hydrogel product based entirely on carbohydrate type structures. This minimizes the disturbance of the crosslinking on the native properties of the glycosaminoglycans.

The method of preparing a hydrogel product involves crosslinking of glycosaminoglycan molecules by covalent bonds, preferably amide bonds, typically using an activating agent for the carboxyl groups on the glycosaminoglycan molecule backbone and amino groups of an at least partially deacetylated glycosaminoglycan. Crosslinking according to the inventive method can be achieved by mild and efficient routes resulting in high yields with minimal degradation of the glycosaminoglycan molecules.

According to some embodiments, the activation step b) and the crosslinking step c) occur simultaneously.

According to some embodiments, the coupling agent of step b) is a peptide coupling reagent. Crosslinking using a peptide coupling agent is advantageous over many other common crosslinking methods (e.g. BDDE crosslinking) since it allows for crosslinking to be performed at neutral pH with minimal degradation of the glycosaminoglycan molecules.

According to some embodiments, the peptide coupling reagent is selected from the group consisting of triazine-based coupling reagents, carbodiimide coupling reagents, imidazolium-derived coupling reagents, Oxyma and COMU.

According to some embodiments, the peptide coupling reagent is a triazine-based coupling reagent. According to some embodiments, the triazine-based coupling reagent is selected from the group consisting of 4-(4,6-dimethoxy-1,3,5-triazin-2-yl)-4-methylmorpholinium chloride (DMTMM) and 2-chloro-4,6-dimethoxy-1,3,5-triazine (CDMT). According to some embodiments, the triazine-based coupling reagent is DMTMM.

According to some embodiments, the peptide coupling reagent is a carbodiimide coupling reagent. According to some embodiments, the carbodiimide coupling reagent is N-(3-dimethylaminopropyl)-N'-ethylcarbodiimide (EDC) combined with N-hydroxysuccinimide (NHS).

The term "crosslinked glycosaminoglycans" or "crosslinked glycosaminoglycan molecules" refers herein to glycosaminoglycans comprising, typically covalent, crosslinks between the glycosaminoglycan molecule chains, which creates a continuous network of glycosaminoglycan molecules held together by the crosslinks.

The crosslinked GAG product is preferably biocompatible. This implies that no, or only very mild, immune response occurs in the treated individual. That is, no or only very mild undesirable local or systemic effects occur in the treated individual.

The crosslinked product according to the disclosure is a gel, or a hydrogel. That is, it can be regarded as a water-insoluble, but substantially dilute crosslinked system of GAG molecules when subjected to a liquid, typically an aqueous liquid.

The crosslinked GAG molecule is preferably present in the form of gel particles. The gel particles preferably have an average size in the range of 0.01-5 mm, preferably 0.1-0.8 mm, such as 0.2-0.5 mm or 0.5-0.8 mm. According to some embodiments, the step c) further comprises providing particles of the crosslinked glycosaminoglycans, having an average size in the range of 0.01-5 mm, preferably 0.1-0.8 mm, such as 0.2-0.5 mm or 0.5-0.8 mm.

The gel contains mostly liquid by weight and can e.g. contain 90-99.9%, water, but it behaves like a solid due to a three-dimensional crosslinked GAG molecule network within the liquid. Due to its significant liquid content, the gel is structurally flexible and similar to natural tissue, which makes it very useful as a scaffold in tissue engineering and for tissue augmentation. It is also useful for treatment of soft tissue disorder and for corrective or aesthetic treatment. It is preferably used as an injectable formulation.

The hydrogel product may also comprise a portion of GAG molecules which are not crosslinked, i.e not bound to the three-dimensional crosslinked GAG molecule network. However, it is preferred that at least 50 % by weight, preferably at least 60 % by weight, more preferably at least 70 % by weight, and most preferably at least 80 % by weight, of the GAG molecules in a gel composition form part of the crosslinked GAG molecule network.

The hydrogel product may be present in an aqueous solution, but it may also be present in dried or precipitated form, e.g. in ethanol. The hydrogel product is preferably injectable.

According to embodiments, the at least partially deacetylated glycosaminoglycan is obtained by a novel method for at least partial deacetylation of a biopolymer, wherein the biopolymer is a glycosaminoglycan, the method comprising:

a1) providing a biopolymer comprising acetyl groups;
a2) reacting the biopolymer comprising acetyl groups with hydroxylamine ($NH_2OH$) at a temperature of 100 °C or less for 2-200 hours to form an at least partially deacetylated biopolymer; and
a3) recovering the at least partially deacetylated biopolymer.

It has been found that hydroxylamine ($NH_2OH$) can advantageously be used for deacetylation of biopolymer comprising acetyl groups under mild reaction conditions. The deacetylated biopolymers may be useful for various applications, e.g. for crosslinking, conjugation or grafting reactions, requiring the presence of free amine groups.

The inventive deacetylation method involves a hydroxylaminolysis reaction. Using hydroxylamine for deacetylation has been found to allow for N-deacetylation under mild conditions resulting in only minor degradation of the polymeric backbone of sensitive polysaccharides such as HA. Using hydroxylamine for deacetylation thus allows for production of deacetylated HA with retained high molecular weight. This is in contrast to previously known methods, such as deacetylation using hydrazine or NaOH as the deacetylating agent, where high degrees of deacetylation have been inevitably accompanied by severe degradation of the polymeric backbone.

According to embodiments, the biopolymer comprising acetyl groups is a glycosaminoglycan, preferably selected from the group consisting of hyaluronic acid, chondroitin and chondroitin sulfate, and mixtures thereof. According to some embodiments, the biopolymer comprising acetyl groups is hyaluronic acid.

The hyaluronic acid can be obtained from various sources of animal and non-animal origin. Sources of non-animal origin include yeast and preferably bacteria. The molecular weight of a single hyaluronic acid molecule is typically in the range of 0.1-10 MDa, but other molecular weights are possible. In certain embodiments the concentration of said hyaluronic acid is in the range of 1 to 100 mg/ml. In some embodiments the concentration of said hyaluronic acid is in the range of 2 to 50 mg/ml. In specific embodiments the concentration of said hyaluronic acid is in the range of 5 to 30 mg/ml or in the range of 10 to 30 mg/ml. In certain embodiments, the hyaluronic acid is crosslinked. Crosslinked hyaluronic acid comprises crosslinks between the hyaluronic acid chains, which creates a continuous network of hyaluronic acid molecules which is held together by the covalent crosslinks, physical entangling of the hyaluronic acid chains and various interactions, such as electrostatic interactions, hydrogen bonding and van der Waals forces.

Crosslinking of the hyaluronic acid may be achieved by modification with a chemical crosslinking agent. The chemical crosslinking agent may for example selected from the group consisting of divinyl sulfone, multiepoxides and diepoxides. According to an embodiment, the hyaluronic acid is crosslinked by a bi- or polyfunctional crosslinking agent comprising two or more glycidyl ether functional groups. According to embodiments the chemical crosslinking agent is selected from the group consisting of 1,4-butanediol diglycidyl ether (BDDE), 1,2-ethanediol diglycidyl ether (EDDE) and diepoxyoctane. According to a preferred embodiment, the chemical crosslinking agent is 1,4-butanediol diglycidyl ether (BDDE).

Polysaccharides, and particularly glycosaminoglycans such as hyaluronic acid, chondroitin and chondroitin sulfate, are often prone to degradation of the backbone under harsh reaction conditions (e.g. very high or low pH, or high temperatures). The inventive method is therefore especially useful for deacetylation of such polysaccharides.

The inventive deacetylation method is useful for obtaining at least partially deacetylated biopolymers in which a significant portion of the molecular weight of the starting material is retained.

According to some embodiments, the weight average molecular weight of the recovered at least partially deacetylated biopolymer is at least 10%, preferably at least 20%, more preferably at least 25%, of the weight average molecular weight of the biopolymer comprising acetyl groups in step a1). The weight average molecular weight of the recovered at least partially deacetylated biopolymer may also be higher, such as at least 30%, 40%, 50%, 60%, 70%, 80% or 90% of the weight average molecular weight of the biopolymer comprising acetyl groups in step a1).

According to some embodiments, the biopolymer comprising acetyl groups has a weight average molecular weight of at least 10 kDa. According to some embodiments, the biopolymer comprising acetyl groups has a weight average molecular weight of at least 100 kDa, of at least 500 kDa, of at least 750 kDa, or of at least 1 MDa. According to some embodiments, the biopolymer comprising acetyl groups has a weight average molecular weight in the range of 1 - 5 MDa, preferably in the range of 2 - 4 MDa.

According to some embodiments, the recovered at least partially deacetylated biopolymer has a weight average molecular weight of at least 10 kDa. According to some embodiments, the recovered at least partially deacetylated biopolymer has a weight average molecular weight of at least 100 kDa kDa, of at least 500 kDa, of at least 750 kDa, or of at least 1 MDa. According to some embodiments, the recovered at least partially deacetylated biopolymer has a weight average molecular weight in the range of 0.1 - 5 MDa, preferably in the range of 0.5 - 5 MDa or 0.5 - 3 MDa.

The deacetylation method of the present disclosure is also applicable to shorter biopolymers, or biooligomers, such as dimers, trimers, tetramers, etc.

According to some embodiments, the biopolymer comprising acetyl groups is an oligobiopolymer which has a weight average molecular weight in the range of 0.3 - 10 kDa.

According to some embodiments, the recovered at least partially deacetylated oligobiopolymer has a weight average molecular weight in the range of 0.3 - 10 kDa.

The biopolymer comprising acetyl groups used as the starting material in the deacetylation method is typically fully, or almost fully, acetylated. By the term "fully acetylated" as used herein with reference to the biopolymer, we mean a biopolymer in which all, or substantially all, free amine groups have been converted to N-acetyl groups. In other words, the "fully acetylated" biopolymer comprises no, or substantially no, free amine groups. According to some embodiments, the biopolymer comprising acetyl groups used as the starting material in step a1) has a degree of acetylation in the range of 98-100 %.

According to some embodiments, the recovered at least partially deacetylated biopolymer has a degree of acetylation at least 1 % less, preferably at least 2% less, preferably at least 3% less, preferably at least 4% less, preferably at least 5% less, than that of the biopolymer comprising acetyl groups in step a1). In other words, the recovered at least partially deacetylated biopolymer may have a degree of acetylation of less than 99%, preferably less than 98%, less than 97%, less than 97%, less than 96%, less than 95%, less than 94% or less than 93%. The recovered at least partially deacetylated biopolymer may also have a degree of acetylation at least 10% less, at least 15% less, at least 20% less, at least 30% less, at least 40% less, or at least 50%, less than that of the biopolymer comprising acetyl groups in step a1).

The deacetylation process may preferably be performed in water or aqueous solution. Thus according to some embodiments, step a1) comprises contacting a biopolymer comprising acetyl groups with hydroxylamine in water so that an aqueous mixture or solution of the biopolymer and the hydroxylamine is formed. In some embodiments, the concentration of hydroxylamine is at least 10 % by weight, preferably at least 20 % by weight, preferably at least 30 % by weight of the aqueous mixture or solution. A higher concentration of hydroxylamine may increase the reaction rate.

Hydroxylamine is often provided in the form of an aqueous solution, typically at a concentration of 50% by weight. In some embodiments, the biopolymer may be mixed and dissolved directly in the aqueous solution of hydroxylamine, optionally diluted. Alternatively, a solid salt of hydroxylamine, for example hydroxylamine hydrochloride or hydroxylamine sulfate, can be dissolved in an aqueous solution of the biopolymer. Adding a salt of hydroxylamine, and covering the salt to hydroxylamine, may be done as an alternative or as a complement to dissolving the biopolymer comprising acetyl groups in an aqueous solution of hydroxylamine.

According to some embodiments, the biopolymer comprising acetyl groups is dissolved in an aqueous solution of hydroxylamine in step a1). According to some embodiments, a salt of hydroxylamine is dissolved in an aqueous solution of a biopolymer comprising acetyl groups in step a1). According to some embodiments, the biopolymer comprising acetyl groups is dissolved in an aqueous solution of hydroxylamine, and a salt of hydroxylamine is dissolved in the aqueous solution of biopolymer comprising acetyl groups is hydroxylamine.

The reaction temperature in step a2) is preferably selected so as not to cause excessive degradation of the biopolymer. According to some embodiments, the temperature in step a2) is in the range of 10-90 °C, preferably 20-80 °C, preferably 30-70 °C, preferably 30-50 °C.

The reaction time in step a2) depends on the desired degree of deacetylation. The reaction time is preferably selected so as not to cause excessive degradation of the biopolymer and is also dependent on the temperature and pH. According to some embodiments, the reaction time in step a2) is 2-150 hours, preferably 5-150 hours, preferably 5-100 hours.

The pH in step a2) is preferably selected so as not to cause excessive degradation of the biopolymer. According to some embodiments, the reaction in step a2) is performed at a pH value in the range of 4-12. According to some embodiments, the reaction in step a2) is performed at a pH value in the range of 9-11. According to some embodiments, the reaction in step a2) is performed at a pH value in the range of 4-9, preferably in the range of 6-9, preferably in the range of 7-8. A lower pH is typically preferred in order to avoid degradation of the biopolymer. Thus, according to some embodiments, the pH of the reaction is lowered to a value in the range of 4-9, preferably in the range of 6-9, preferably in the range of 7-8, by addition of a pH reducing agent. The pH reducing agent may for example be selected from the group consisting of mineral acids, organic acids and pH reducing salts, and mixtures or combinations thereof. Examples of useful mineral acids include, but are not limited to, sulfuric acid, hydrochloric acid and hydroiodic acid, hydrobromic acid and phosphoric acid. Examples of useful organic acids include, but are not limited to, acetic acid, propionic acid, pivalic acid, citric acid, oxalic acid, malonic acid, lactic acid, benzoic acid, formic acid, and halogenated carboxylic acids, such as trifluoroacetic acid and trichloroacetic acid. Examples of useful pH reducing salts include, but are not limited to, ammonium chloride, ammonium bromide, ammonium iodide, hydroxylamine hydrochloride and hydroxylamine sulfate. In a preferred embodiment, the pH reducing agent comprises hydroxylamine hydrochloride or hydroxylamine sulfate, most preferably hydroxylamine hydrochloride. In some embodiments, the pH reducing agent is hydroiodic acid (HI). In some embodiments, the pH reducing agent is trifluoroacetic acid (TFA).

According to some embodiments, the reaction in step a2) is performed in inert atmosphere and/or in darkness.

The products obtained by the deacetylation method described above may have properties that differ significantly from corresponding products obtained by other known deacetylation methods.

The hydrogel product obtained by the inventive method may optionally be subjected to the step d) of acylating residual amine groups of the crosslinked glycosaminoglycans provided in step c) to form acylated crosslinked glycosaminoglycans. This process is also referred to herein as re-acylation, or re-acetylation.

It has been found that acylation, for example acetylation, of residual free amine groups in a hydrogel product comprising amide crosslinked glycosaminoglycan molecules can be used to modify the mechanical properties of the hydrogel product. Without wishing to be bound to any specific scientific explanation, it is contemplated that acylation of the free amine groups can reduce the formation of zwitterionic complexes acting as additional crosslinks in the hydrogel product, thereby resulting in the formation of a softer gel.

According to some embodiments, the step d) comprises acetylating residual amine groups of the crosslinked glycosaminoglycans provided in step c) to form acetylated crosslinked glycosaminoglycans. Glycosaminoglycans in their native form are N-acetylated. Acetylation of free amine groups in a hydrogel product may therefore be expected to produce a hydrogel product more similar to the native glycosaminoglycans.

According to some embodiments, the step d) comprises allowing the crosslinked glycosaminoglycans provided in step c) to react with an acetylating agent under reaction conditions suitable to form acetylated crosslinked glycosaminoglycans.

According to some embodiments, the acetylating agent is selected from the group consisting of acetic anhydride, isopropenyl acetate and pre-activated ester of acetic acid.

The re-acetylation can be performed according to standard protocol using e.g. acetic anhydride, isopropenyl acetate or pre-activated ester of acetic acid, typically in aqueous or alcoholic solution, or mixtures thereof, or under neat conditions. Preferably the re-acetylation process can be performed in a solid state reaction using alcohol, preferably methanol or ethanol, an acetylating agent and, if desired, an organic or inorganic base.

The potential problem of over-acetylation, O-acetylation, ester formation and/or anhydride formation, can be dealt with by including a post-crosslinking alkaline treatment step. The re-acetylation step could be excluded from the process, to deliver zwitterionic hydrogels, if desired.

The hydrogel product obtained by the inventive method is optionally subjected to the step e) of subjecting the crosslinked glycosaminoglycans provided in step c) or d) to alkaline treatment to hydrolyze ester crosslinks formed as byproducts during the amide crosslinking in step c).

Amide coupling using a using a di- or multiamine functional crosslinker together with a coupling agent is an attractive route to preparing crosslinked glycosaminoglycan molecules useful for hydrogel products. Crosslinking can be achieved using a non-carbohydrate based di- or multinucleofile crosslinker, for example hexamethylenediamine (HMDA), or a carbohydrate based di- or multinucleofile crosslinker, for example diaminotrehalose (DATH) together with a glycosaminoglycan. Crosslinking can also be achieved using an at least partially deacetylated glycosaminoglycan, either alone or in combination with a second glycosaminoglycan, whereby the deacetylated glycosaminoglycan itself acts as the di- or multinucleofile crosslinker.

It has been found that coupling reactions or crosslinking of glycosaminoglycans using coupling agents to form amide bonds are often associated with the concurrent formation of a fraction of ester bonds. The size of the ester bond fraction may vary depending on the reaction conditions, concentrations and coupling agent used. Ester bonds are more susceptible to degradation during handling and storage of the hydrogel products, for example high temperature sterilization (autoclaving), compared to amide bonds. This means that the properties of hydrogel products comprising ester bonds, or a combination of ester and amide bonds, will tend to change over time as the ester bonds degrade. In order to obtain hydrogels which maintain their original properties over a longer period of time, and it is preferable that the glycosaminoglycans are crosslinked by amide bonds.

The present inventors have now found that subjecting the crosslinked glycosaminoglycans having both amide and ester crosslinks to alkaline treatment can hydrolyze ester crosslinks formed as byproducts during the amide crosslinking without concurrently degrading the amide bonds. It has further been found that upon selection of suitable reaction conditions the hydrolysis of the ester bonds can be achieved without undue degradation of the glycosaminoglycan backbone.

The method of preparing a hydrogel product optionally comprises the step d) of acylating residual amine groups of the crosslinked glycosaminoglycans provided in step c) to form acylated crosslinked glycosaminoglycans

Acylation, for example acetylation, of residual free amine groups in a hydrogel product comprising amide crosslinked glycosaminoglycan molecules can be used to modify the mechanical properties of the hydrogel product. Without wishing to be bound to any specific scientific explanation, it is contemplated that acylation of the free amine groups can reduce the formation of zwitterionic complexes acting as additional crosslinks in the hydrogel product, thereby resulting in the formation of a softer gel.

According to some embodiments, the step d) comprises acetylating residual amine groups of the crosslinked glycosaminoglycans provided in step c) to form acetylated crosslinked glycosaminoglycans. Glycosaminoglycans in their native form are N-acetylated. Acetylation of free amine groups in a hydrogel product may therefore be expected to produce a hydrogel product more similar to the native glycosaminoglycans.

Acylation of glycosaminoglycans using an acylating agent to form amide bonds is often associated with the concurrent formation of a fraction of ester bonds. The size of the ester bond fraction may vary depending on the reaction conditions, concentrations and the acylating agent used. Ester bonds are more susceptible to degradation during handling and storage of the hydrogel products, for example high temperature sterilization (autoclaving), compared to amide bonds. This means that the properties of hydrogel products comprising ester bonds, or a combination of ester and amide bonds, will tend to change over time as the ester bonds degrade. In order to obtain hydrogels which maintain their original properties over a longer period of time, and it is preferable that the glycosaminoglycans acylated by amide bonds.

The present inventors have now found that subjecting the acylated crosslinked glycosaminoglycans having both amide and ester crosslinks to alkaline treatment can hydrolyze ester bonds formed during the acylation without concurrently degrading the amide bonds. It has further been found that upon selection of suitable reaction conditions the hydrolysis of the ester bonds can be achieved without undue degradation of the glycosaminoglycan backbone.

The alkaline treatment selectively hydrolyses the less stable ester bonds from the crosslinking process, or O-acetylation and anhydride formation from the re-acetylation process, and results in an increased amide/ester bond ratio in the material.

A typical application of the resulting hydrogel product involves the preparation of injectable formulations for treatment of soft tissue disorders, including, but not limited to, corrective and aesthetic treatments.

The term "molecular weight" as used herein in connection with various polymers, e.g. polysaccharides, refers to the weight average molecular weight, $M_w$, of the polymers, which is well defined in the scientific literature. The weight average molecular weight can be determined by, e.g., static light scattering, small angle neutron scattering, X-ray scattering, and sedimentation velocity. The unit of the molecular weight is Da or g/mol.

The person skilled in the art realizes that the present invention by no means is limited to the preferred embodiments described herein. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

EXAMPLES

Without desiring to be limited thereto, the present invention will in the following be illustrated by way of examples.

Definitions

**Mw** - The mass average molecular mass

**SwF** - Swelling factor analysis in saline, volume for a 1 g gel that has swelled to its maximum (mL/g)

**SwC** - Swelling capacity in saline, total liquid uptake per gram PS (mL/g).

**SwCC$_{PS}$** - Corrected swelling degree, total liquid uptake of one gram PS, corrected for GelP (mL/g).

$$SwCC_{PS} = \frac{SwF}{GelP * [HA]}$$

**[PS]** - The polysaccharide concentration (mg/g).

**GelP** - Gel part is a description of the percentage of PS that is a part of the gel network. A number of 90% means that 10% of the polysaccharide is not a part of the gel network.

**CrD$_{amide}$** - Degree of amide cross-linking (%) was analyzed with SEC-MS and defined as:

$$CrD_{amide} = \frac{n_{amide\ crosslinks}}{n_{HA\ disaccharides}}$$

$$CrD_{amide}$$

$$= \frac{\sum(Area\ amide\ crosslinked\ HA\ fragments)}{\sum(Area\ amide\ crosslinked\ HA\ fragments + Area\ HA\ amine\ fragments)}$$

$$* (100 - DoA)$$

**DoA** - Degree of Acetylation. The degree of acetylation (DoA) is the molar ratio of acetyl groups compared to hyaluronic acid disaccharides. DoA can be calculated from NMR spectra by comparing the integral of the acetyl signal of the hyaluronan disaccharide residues to the integral of the C2-H signal of the deacetylated glucosamine residues according to the equation.

$$DoA\ (\%) = \left( \frac{\frac{Integral\ acetylgroup}{3}}{\frac{Integral\ acetylgroup}{3} + Integral\ C2-H} \right) * 100$$

Example 1 - Deacetylation of Hyaluronic Acid by Hydroxylaminolysis

0.2 g of HA (Mw 2 500 kDa, DoA 100%) was solubilised in hydroxylamine (Sigma-Aldrich 50 vol% solution), or a mixture of hydroxylamine/water. The solution was incubated in darkness and under argon at 30 - 55 °C for 5 - 120 hours. After incubation, the mixture was precipitated by ethanol. The obtained precipitate was filtered, washed with ethanol and then re-dissolved in water. The solution was purified by ultrafiltration and subsequently lyophilized to obtain the deacetylated HA (de-Ac HA) as a white solid. The results are presented in Table 1.
Deacetylation by hydroxylaminolysis conserves the Mw of the HA backbone, c.f. hydrazinolysis (Example 2) and alkaline methods (see Examples 3 and 4). In addition the deacetylation process is efficient, c.f. alkaline methods (see Examples 3 and 4).

Reaction conditions used:

Temperatures (°C): 30, 40 and 55.

Time (h): 24, 48, 72, 120.

[NH$_2$OH]: 50, 35 and 20 wt. % in water

**Table 1.**

| Example | Temp (°C) | Time (h) | pH | Conditions | Start Mw (kDa) | Start [HA] (g/L) | NMR DoA (%) | Mw (kDa) |
|---------|-----------|----------|-----|-----------|----------------|------------------|-------------|----------|
| 1-1 | 30 | 24 | 10 | NH$_2$OH (50 wt.% in water) | 2500 | 20 | 99 | 970[a] |
| 1-2 | 30 | 72 | 10 | NH$_2$OH (50 wt.% in water) | 2500 | 20 | 98 | 1060[a] |
| 1-3 | 30 | 196 | 10 | NH$_2$OH (50 wt.% in water) | 2500 | 20 | 95 | 1060[a] |
| 1-4 | 40 | 24 | 10 | NH$_2$OH (50 wt.% in water) | 2500 | 20 | 98 | 950[b] |
| 1-5 | 40 | 72 | 10 | NH$_2$OH (50 wt.% in water) | 2500 | 20 | 95 | 980[a] |
| 1-6 | 40 | 24 | 10 | NH$_2$OH (35 wt.% in water) | 2500 | 20 | 99 | 1090[a] |
| 1-7 | 40 | 24 | 9 | NH$_2$OH (20 wt.% in water) | 2500 | 20 | 100 | 1130[a] |
| 1-8 | 40 | 24 | 10 | NH$_2$OH (50 wt.% in water) | 1000 | 20 | 98 | 670[b] |
| 1-9 | 55 | 5 | 10 | NH$_2$OH (50 wt.% in water) | 2500 | 20 | 99 | 1010[a] |
| 1-10 | 55 | 72 | 10 | NH$_2$OH (50 wt.% in water) | 2500 | 20 | 86 | 740[a] |
| 1-11 | 55 | 72 | 10 | NH$_2$OH (50 wt.% in water) | 2500 | 20 | 87 | 670[b] |
| 1-12 | 55 | 120 | 10 | NH$_2$OH (50 wt.% in water) | 2500 | 20 | 78 | 400[b] |
| 1-13 | 60 | 24 | 10 | NH$_2$OH (50 wt.% in water) | 2500 | 20 | 92 | 930[b] |
| 1-14 | 70 | 24 | 10 | NH$_2$OH (50 wt.% in water) | 2500 | 20 | 86 | 720[b] |
| [a]SEC-UV; [b]SEC-MALS-RI | | | | | | | | |

Example 2 - Deacetylation of Hyaluronic Acid by Hydrazinolysis - Comparative Example

0.2 g of HA (Mw 2 500 kDa, DoA 100%) was solubilised in 10 mL of a 1% solution of hydrazine sulphate in hydrazine monohydrate. The reaction took place in dark and under argon at 30-55 °C for 24-120 hours. The mixture was precipitated by ethanol. The precipitate obtained was filtered, washed with ethanol and then re-dissolved in water. The final deacetylated HA product was obtained after ultrafiltration, and freeze-dried. The results are presented in Table 2.
Deacetylation by hydrazinolysis gives more degradation of the HA backbone, resulting in lower Mw of the deacetylated product as compared to hydroxylaminolysis (Example 1).

Reaction conditions used:

Temperatures (°C): 30, 40 and 55.
Time (h): 24, 48, 72, 120.

**Table 2.**

| Example | Temp (°C) | Time (h) | pH | Conditions | DoA (%) | Mw (SEC MALS) (kDa) |
|---------|-----------|----------|----|-----------|---------|---------------------|
| 2-1 | 30 | 24 | 13 | $NH_2NH_2+NH_2NH_2H2SO_4$ | 100 | 220 |
| 2-2 | 30 | 120 | 13 | $NH_2NH_2+NH_2NH_2H2SO_4$ | 96 | 320 |
| 2-3 | 40 | 48 | 13 | $NH_2NH_2+NH_2NH_2H2SO_4$ | 96 | 260 |
| 2-4 | 40 | 120 | 13 | $NH_2NH_2+NH_2NH_2H2SO_4$ | 92 | 170 |
| 2-5 | 55 | 24 | 13 | $NH_2NH_2+NH_2NH_2H2SO_4$ | 93 | 60 |
| 2-6 | 55 | 48 | 13 | $NH_2NH_2+NH_2NH_2H2SO_4$ | 89 | 70 |
| 2-7 | 55 | 72 | 13 | $NH_2NH_2+NH_2NH_2H2SO_4$ | 83 | 40 |
| 2-8 | 55 | 120 | 13 | $NH_2NH_2+NH_2NH_2H2SO_4$ | 77 | 50 |

Example 3 - Deacetylation of Hyaluronic Acid by Homogeneous Alkaline hydrolyses - Comparative Example

HA (1 000 kDa) was weighted to a reaction vessel, NaOH solution was added and the reaction was mixed until a homogenous solution was obtained. The mixture was incubated without stirring and subsequently diluted with water and EtOH. The mixture was neutralized by adding 1.2 M HCl, precipitated by adding EtOH. The precipitate was washed with ethanol (70 w/w%) followed by ethanol and dried in vacuum over night to obtain a solid. The results are presented in Table 3.

Deacetylation by homogenous alkaline hydrolysis under described conditions gives significant degradation of the HA backbone, resulting in lower Mw of the deacetylated product as compared to hydroxylaminolysis (Example 1). In addition the deacetylation process is less efficient as compared to hydroxylaminolysis (Example 1) and hydrazinolysis (Example 2).

**Table 3.**

| Example | Temp (°C) | Time (h) | pH | Conditions | DoA (%) | Mw (SEC UV) (kDa) |
|---------|-----------|----------|----|-----------|---------|-------------------|
| 3-1 | 65 | 4 | 13 | 1 M NaOH (aq.) | 99 | 10 |

Example 4 - Deacetylation of Hyaluronic Acid by Heterogeneous Alkaline hydrolysis - Comparative Example

HA (1 000 kDa) was weighted to a reaction vessel and NaOH in EtOH (70% w/w%) was added. The heterogeneous mixture was incubated and subsequently neutralized by addition of 1.2 M HCl. The precipitate was washed with ethanol (75 w/w%) followed by ethanol and dried in vacuum over night to obtain a solid. The results are presented in Table 4.

Deacetylation by heterogenous alkaline hydrolysis gives significant degradation of the HA backbone, resulting in lower Mw of the deacetylated product as compared to hydroxylaminolysis (Example 1). In addition the deacetylation process is less efficient as compared to hydroxylaminolysis (Example 1) and hydrazinolysis (Example 2).

**Table 4.**

| Example | Temp (°C) | Time (h) | pH | Conditions | DoA (%) | Mw (SEC UV) (kDa) |
|---------|-----------|----------|----|-----------|---------|-------------------|
| 4-1 | 35 | 24 | NA | 1.0 M NaOH (70% EtOH) | 99 | 60 |

Example 5 - Crosslinking deacetylated HA

The coupling agent DMTMM was dissolved in Na-phosphate buffer (1 mM, pH 7.4), if needed pH was adjusted on the DMTMM mixture and the solution was subsequently added deacetylated HA (Mw 110, 160, 240 and 670 kDa and DoA 82, 89, 93 and 87 % respectively). The reaction mixture was homogenized by shaking for 3.5 minutes and mixing with a spatula or by pressing the mixture though a filter. The reaction mixture was placed in a water bath at 35 °C for 24 hours. The reaction was stopped by removal from the water bath and the gel was cut in to small pieces with a spatula or pressed through a filter. The reaction mixture was adjusted to pH >13 with 0.25 M NaOH, stirred for 40-90 minutes and subsequently neutralized with 1.2 M HCl. After neutralization, the gels were precipitated in ethanol and washed with ethanol (70 % w/w) 3-5 times followed by ethanol and dried in vacuum over night. The dried gels were swelled in 8 mM phosphate buffer in 0.7% NaCl for at least two hours to a concentration of 30 mg/mL. The pH was controlled and adjusted if necessary to 7.0-7.4. The gel particles were reduced in size with a 315 $\mu$m filter. The gel was filled in syringes and the syringes were sterilized by autoclavation ($F_0$19). The results are presented in Table 5.

The results show formation of hydrogels by crosslinking deacetylated HA, with different Mw and DoA, using DMTMM. The gel properties can be controlled by the reaction conditions and characteristics of the deacetylated HA (e.g. Mw and DoA).

**Table** 5.

| Example | Start Mw (kDa) | Start DoA (%) | DMTMM (mol%) | SwCC$_{ps}$ (mL/g) | GelP (%) | CrD$_{amide}$ |
|---------|----------------|---------------|--------------|---------------------|----------|----------------|
| 5-1 | 110 | 82 | 2.3 | 256 | 54 | 0.5 |
| 5-2 | 110 | 82 | 2.6 | 127 | 67 | 0.5 |
| 5-3 | 160 | 89 | 0.9 | 150 | 68 | 0.2 |
| 5-4 | 160 | 89 | 1.2 | 95 | 74 | 0.2 |
| 5-5 | 240 | 93 | 1.25 | 137 | 71 | 0.4 |
| 5-6 | 240 | 93 | 1.5 | 89 | 80 | NA |
| 5-7 | 670 | 87 | 4.0 | 95 | 83 | 1.0 |
| 5-8 | 670 | 87 | 5.0 | 54 | 93 | 1.2 |

Example 6 - Crosslinking a mixture of deacetylated HA and HA

Na-hyaluronan (HA) and deacetylated hyaluronan (deAcHA) was dissolved in water (Milli-Q) in a 50 mL Falcon tube with end-over-end stirring for 4-72 hours. After complete dissolution of hyaluronan the samples were freeze-dried. The coupling agent DMTMM was dissolved in Na-phosphate buffer (1 mM, pH 7.4), pH was measured on the DMTMM mixture and was subsequently added to the freeze-dried hyaluronan. The reaction mixture was homogenized. The reaction mixture was placed in a water bath at 35 °C for 24 hours. The reaction was stopped by removal from the water bath and the gel was cut in to small pieces with a spatula. The reaction mixture was adjusted to pH >13 with 0.25 M NaOH 30-90 minutes. The gels were neutralized with 1.2 M HCl. After neutralization, the gels were precipitated with ethanol and washed with ethanol (70%) 3 - 5 times, washed with ethanol and dried in vacuum over night. The dried gels were swelled in 8 mM phosphate buffer in 0.7% NaCl for at least two hours to a concentration of 30 mg/mL. The pH was controlled and adjusted if necessary to 7.0-7.4. The gel particles were reduced in size with a 315 $\mu$m filter. The gel was filled in syringes and the syringes were sterilized by autoclavation ($F_0$ 19). The results are presented in Table 6.

The results show formation of hydrogels by crosslinking mixtures of deacetylated HA with non-deacetylated HA using DMTMM. The gel properties can be controlled by the reaction conditions (e.g. ratio HA/deAcHA) and characteristics of the deacetylated HA (e.g. Mw and DoA) and HA (e.g. Mw).

**Table 6.**

| Example | Start Mw DeAcHA (kDa) | Start DoA DeAcHA (%) | Start Mw HA (kDa) | HA/deAcHA (%) | DMTMM (mol%) | SwCC$_{ps}$ (mL/g) | GelP (%) | CrD$_{amide}$ |
|---------|------------------------|----------------------|-------------------|---------------|--------------|---------------------|----------|----------------|
| 6-1 | 110 | 82 | 1000 | 50/50 | 1 | 385 | 39 | 0.4 |
| 6-2 | 110 | 82 | 1000 | 25/75 | 0.74 | 145 | 35 | 0.5 |

Example 7 - Re-acetylation of a hydrogel

The coupling agent DMTMM was dissolved in Na-phosphate buffer (1 mM, pH 7.4), if needed pH was adjusted on the DMTMM mixture and the solution was subsequently added to deacetylated HA of various Mw and DoA. The reaction mixture was homogenized by shaking for 3.5 minutes and mixing with a spatula or by pressing the mixture though a filter. The reaction mixture was placed in a water bath at 35 °C for 24 hours. The reaction was stopped by removal from the water bath and the gel was cut in to small pieces with a spatula or pressed through a filter. The reaction mixture was adjusted to pH >13 with 0.25 M NaOH, stirred for 40-90 minutes and subsequently neutralized with 1.2 M HCl. After neutralization, the gels were precipitated in ethanol and washed with ethanol (70 w/w%) 3-5 times followed by ethanol and dried in vacuum over night.

The precipitated gel was suspended in MeOH and Ac$_2$O (20 equiv./HA disaccharide) was added. The suspension was incubated at 40 °C for 24 hrs followed by filtration, the obtained solid was washed with 70 w/w% EtOH, washed with EtOH and subsequently dried in vacuum over night. The acetylated gel was dissolved in 0.25 M NaOH, stirred for 60 minutes and subsequently neutralized with 1.2 M HCl. After neutralization, the gels were precipitated in ethanol and washed with ethanol (70 w/w%) 3 - 5 times followed by ethanol and dried in vacuum over night. The dried gels were swelled in 8 mM phosphate buffer in 0.7% NaCl for at least two hours to a concentration of 30 mg/mL.

As a control experiment (example 7-3), HA (310 kDa) was suspended in MeOH and Ac$_2$O (20 equiv./HA disaccharide) was added. The suspension was incubated at 40 °C for 24 hrs followed by filtration, the obtained solid was washed with 70 w/w% EtOH, with EtOH and subsequently dried in vacuum over night. The product was dissolved in 0.25 M NaOH, stirred for 60 minutes and subsequently neutralized with 1.2 M HCl. After neutralization, the gels were precipitated in ethanol and washed with ethanol (70 w/w%) 3 - 5 times followed by ethanol and dried in vacuum over night. Mw of the obtained product was analyzed. The results are presented in Table 7.

**Table 7**

| Example | Start Mw (kDa) | Start DoA (%) | DMTMM (mol%) | DoA (%) Gel powder | [PS] (mg/mL) | GelP (%) | SwCC$_{ps}$ (mL/g) | DoA (%) after acetylation | Mw SEC-UV (kDa) |
|---|---|---|---|---|---|---|---|---|---|
| | Crosslinking reaction | | | Precipitated gel before acetylation | Gel after acetylation | | | | |
| 7-1 | 240 | 93 | 1.3 | 94 | 29 | 79 | 126 | 98 | NA |
| 7-2 | 110 | 82 | 2.7 | 84 | 29 | 91 | 60 | 95 | NA |
| 7-3 | 310 | NA | NA | NA | NA | NA | NA | NA | 220 |

Example 8 - Alkaline hydrolyses of crosslinked HA gel

The coupling agent DMTMM was dissolved in Na-phosphate buffer (1 mM, pH 7.4), if needed, the pH was adjusted on the DMTMM mixture and the solution was subsequently added to deacetylated HA of various Mw and DoA. The reaction mixture was homogenized by shaking for 3.5 minutes and mixing with a spatula or by pressing the mixture though a filter. The reaction mixture was placed in a water bath at 35 °C for 24 hours. The reaction was stopped by removal from the water bath and the gel was cut in to small pieces with a spatula or pressed through a filter.

The gel was divided in two parts, for one part of the gel the pH was adjusted to pH >13 with 0.25 M NaOH and was stirred for 40 - 90 minutes and subsequently neutralized with 1.2 M HCl. After neutralization, the gels were precipitated in ethanol and washed with ethanol (70 w/w%) 3 - 5 times followed by ethanol and dried in vacuum over night.

The second part of the gel was diluted with water and pH was adjusted to 6.5-7.5. After neutralization, the gels were precipitated with ethanol and washed with ethanol (70 w/w%) 3 - 5 times followed by ethanol and dried in vacuum over night.

The alkaline treatment (pH 13 for 60 min) is done to hydrolyze inter- and intramolecular ester bonds formed between HA chains during the crosslinking step, and potential O-acetates and anhydrides formed during the re-acetylation step as well as residual active esters formed by the coupling reagent. The alkaline hydrolysis results in an increased amide/ester bond ratio in the material.

As a control experiments (Example 8-9 to 8-11), the coupling agent DMTMM was dissolved in Na-phosphate buffer (1 mM, pH 7.4), if needed, the pH was adjusted on the DMTMM mixture and the solution was subsequently added to HA. The reaction mixture was homogenized by shaking for 3.5 minutes and pressing the mixture though a filter. The reaction mixture was placed in a water bath at 5 or 50 °C for 24 hours. The reaction was stopped by removal from the water bath and the gel was cut in to small pieces with a spatula or pressed through a filter. The reaction mixture was adjusted to pH >13 with 0.25 M NaOH for 70-100 minutes. The gels were neutralized with 1.2 M HCl. After neutralization, the gels were precipitated with ethanol and washed with ethanol (70%) 3 - 5 times, washed with ethanol and dried in vacuum over night. Mw of the obtained product was analyzed. The results are presented in Tables 8a and 8b.

The results show that post-crosslinking alkaline treatment gives the gel increased swelling properties. The control experiments (Example 8-9 to 8-11) show that the increased swelling is not caused by degradation of the HA backbone. The alkaline treatment hydrolyzes inter- and intramolecular ester bonds formed between HA chains during the crosslinking step as well as residual active esters formed by the coupling reagent. The alkaline hydrolysis results in an increased amide/ester bond ratio in the material.

**Table 8a.**

| Example | Start Mw (kDa) | Start DoA (%) | DMTMM (mol%) | Time for hydrolysis (min) | SwC (mL/g) | SwCC$_{ps}$ | GelP | [PS] |
|---|---|---|---|---|---|---|---|---|
| 8-1 | 240 | 95 | 25 | 0 | 14 | NA | NA | NA |
| 8-2 | 240 | 95 | 25 | 60 | 18 | NA | NA | NA |
| 8-3 | 100 | 82 | 2.6 | 0 | NA | 55 | 91 | 50 |
| 8-4 | 100 | 82 | 2.6 | 60 | NA | 79 | 82 | 46 |
| 8-5 | 670 | 87 | 6.0 | 0 | 23 | NA | NA | NA |
| 8-6 | 670 | 87 | 6.0 | 60 | 35 | NA | NA | NA |
| 8-7 | 670 | 87 | 7.9 | 0 | 19 | NA | NA | NA |
| 8-8 | 670 | 87 | 7.9 | 60 | 27 | NA | NA | NA |

**Table 8b.**

| Example | Start Mw (kDa) | DMTMM (mol%) | Temp (°C) | Time for hydrolysis (min) | Final Mw (kDa) |
|---|---|---|---|---|---|
| 8-9 | 1360 | 0 | 5 | 100 | 1340 |
| 8-10 | 1360 | 0 | 50 | 70 | 1230 |
| 8-11 | 1360 | 25 | 5 | 90 | 1310 |

Example 9 - Complete HA gel process

DMTMM (1.25 %mol) was dissolved in Na-phosphate buffer (1 mM, pH 7.4) and pH was adjusted to 7.0 for the solution, and the solution was subsequently added to deacetylated HA (Mw 240 kDa, DoA 93%). The reaction mixture was homogenized by shaking and mixing with a spatula, and the reaction mixture was incubated at 35 °C.
After 24 hrs, the reaction mixture was pressed through a filter, pH of the mixture was adjusted to >13 by addition of 0.25 M NaOH, stirred for 60 minutes and subsequently neutralized with 1.2 M HCl. After neutralization, the gel were precipitated in ethanol and washed with ethanol (70 w/w%) 3 times, washed with ethanol and dried in vacuum over night.
The precipitated gel was suspended in MeOH and $Ac_2O$ (20 equiv./HA disaccharide) was added. The suspension was incubated at 40 °C for 24 hrs followed by filtration, the obtained solid was washed with 70% EtOH, with EtOH and subsequently dried in vacuum over night.
The re-acetylated gel was dissolved in 0.25 M NaOH, stirred for 60 minutes and subsequently neutralized with 1.2 M HCl. After neutralization, the gels were precipitated in ethanol and washed with ethanol (70 w/w%), washed with ethanol and dried in vacuum over night. The dried gel was swelled in 8 mM phosphate buffer in 0.7% NaCl for at least two hours to a concentration of 30 mg/mL. The pH was controlled and adjusted if necessary to 7.0-7.4. The gel was filled in syringes and the syringes were sterilized by autoclavation ($F_0$19). The properties of the obtained gel are presented in Table 9.

**Table 9.**

| Example | DoA (%) | [PS] | GelP | $SwCC_{ps}$ |
|---------|---------|------|------|-------------|
| 9-1 | 98 | 29 | 79 | 126 |

**Claims**

1. A method for at least partial deacetylation of a biopolymer comprising acetyl groups, comprising:

   a1) providing a biopolymer comprising acetyl groups;
   a2) reacting the biopolymer comprising acetyl groups with hydroxylamine ($NH_2OH$) at a temperature of 100 °C or less for 2-200 hours to form an at least partially deacetylated biopolymer; and
   a3) recovering the at least partially deacetylated biopolymer.

2. The method according to claim 1, wherein the biopolymer comprising acetyl groups is a glycosaminoglycan, preferably selected from the group consisting of hyaluronic acid, chondroitin and chondroitin sulfate, and mixtures thereof.

3. The method according to any one of the preceding claims, wherein the weight average molecular weight of the recovered at least partially deacetylated biopolymer is at least 10%, preferably at least 20%, more preferably at least 25%, of the weight average molecular weight of the biopolymer comprising acetyl groups in step a1).

4. The method according to any one of the preceding claims, wherein the biopolymer comprising acetyl groups in step a1) has a degree of acetylation in the range of 98-100 %.

5. The method according to any one of the preceding claims, wherein the recovered at least partially deacetylated biopolymer has a degree of acetylation at least 1 % less, preferably at least 2% less, preferably at least 3% less, preferably at least 4% less, preferably at least 5% less, than that of the biopolymer comprising acetyl groups in step a1).

6. The method according to any one of the preceding claims, wherein step a2) comprises reacting the biopolymer comprising acetyl groups with hydroxylamine in water.

7. The method according to claim 12, wherein the concentration of hydroxylamine is at least 10 % by weight, preferably at least 20 % by weight, preferably at least 30 % by weight.

8. The method according to any one of the preceding claims, wherein the temperature in step a2) is in the range of 10-90 °C, preferably 20-80 °C, preferably 30-70 °C, preferably 30-50 °C.

9. The method according to any one of the preceding claims, wherein the reaction time in step a2) is 2-150 hours, preferably 5-150 hours, preferably 5-100 hours.

10. The method according to any one of the preceding claims, wherein the reaction in step a2) is performed at a pH value in the range of 4-12.

11. The method according to any one of the preceding claims, wherein the reaction in step a2) is performed at a pH value in the range of 9-11.

12. The method according to claim 10, wherein the reaction in step a2) is performed at a pH value in the range of 4-9, preferably in the range of 6-9, preferably in the range of 7-8.

13. The method according to claim 12, wherein the pH of the reaction is lowered to a value in the range of 4-9, preferably in the range of 6-9, preferably in the range of 7-8, by addition of a pH reducing agent.

14. An at least partially deacetylated glycosaminoglycan obtained by the method according to any one of claims 1-13.

15. A deacetylated glycosaminoglycan having a degree of acetylation of 99% or less, preferably 98% or less, preferably 97% or less, preferably 96% or less, and a weight average molecular weight of 0.1 MDa or more, preferably 0.3 MDa or more, preferably 0.5 MDa or more.

16. Use of hydroxylamine to at least partially deacetylate a biopolymer comprising acetyl groups.

17. Use according to claim 16, wherein the biopolymer comprising acetyl groups is a glycosaminoglycan, preferably selected from the group consisting of hyaluronic acid, chondroitin and chondroitin sulfate, and mixtures thereof.

18. A method of preparing a hydrogel product comprising crosslinked glycosaminoglycan molecules, said method comprising the steps of:

a) providing a solution comprising an at least partially deacetylated glycosaminoglycan according to claim 14 or 15 and optionally a second glycosaminoglycan;
b) activating carboxyl groups on the at least partially deacetylated glycosaminoglycan and/or the optional second glycosaminoglycan with a coupling agent, to form activated glycosaminoglycans;
c) crosslinking the activated glycosaminoglycans via their activated carboxyl groups using amino groups of the at least partially deacetylated glycosaminoglycans to provide glycosaminoglycans crosslinked by amide bonds.

Fig. 1

*Fig. 2*

**EP 3 252 082 A1**

| Europäisches Patentamt European Patent Office Office européen des brevets | **EUROPEAN SEARCH REPORT** | Application Number EP 16 17 2254 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/081739 A2 (FRAUNHOFER GES FORSCHUNG [DE]; BREDEHORST REINHARD [DE]; HINTSCHE RAIN) 17 October 2002 (2002-10-17) | 1,3, 5-10,12, 13,16 | INV. C08B37/00 C08B37/08 |
| A | * the whole document * * in particular: abstract; page 5, line 13 - page 6, line 29; claims 1-38; figures 1-4; examples * | 2,4,11, 14,15, 17,18 | C08L5/00 C08J3/075 |
| X | US 2015/045573 A1 (CHENG WEIJUN [US] ET AL) 12 February 2015 (2015-02-12) | 1,3, 5-10,12, 13,16 | |
| A | * the whole document * * in particular: abstract; [0008]-[0019]; claims 1-20; figures 1-13; examples * | 2,4,11, 14,15, 17,18 | |
| X | WO 02/082078 A2 (FRAUNHOFER GES FORSCHUNG [DE]; BREDEHORST REINHARD [DE]; HINTSCHE RAIN) 17 October 2002 (2002-10-17) | 1,3, 5-10,12, 13,16 | |
| A | * the whole document * * in particular: abstract; page 4, line 1 - page 7, line 9; claims 1-45; figures 1 and 2; examples * | 2,4,11, 14,15, 17,18 | TECHNICAL FIELDS SEARCHED (IPC) |
| X | WO 02/18450 A1 (FIDIA ADVANCED BIOPOLYMERS SRL [IT]; RENIER DAVIDE [IT]; CRESCENZI VIT) 7 March 2002 (2002-03-07) | 14,15,18 | C08B C08L C08J |
| A | * the whole document * * in particular: abstract; page 2, lines 10-22; page 7, line 4 - page 15, line 5; claims 1-43; examples * | 1-13,16, 17 | |

-/--

The present search report has been drawn up for all claims

| Place of search | Date of completion of the search | Examiner |
|---|---|---|
| Munich | 3 August 2016 | Ferreira, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

24

Europäisches
Patentamt

European
Patent Office

Office européen
des brevets

**EUROPEAN SEARCH REPORT**

Application Number

EP 16 17 2254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/01733 A1 (FIDIA ADVANCED BIOPOLYMERS SRL [IT]; BELLINI DAVIDE [IT]; TOPAI ALESSA) 13 January 2000 (2000-01-13) | 14,15,18 | |
| A | * the whole document * * in particular: abstract; page 2, line 17 - page 5, line 3 ; page 8, line 26 - page 9, line 13; page 10, line 19 - page 12, line 15; claims 1-40; figures 1-3; examples * | 1-13,16, 17 | |
| X | WO 02/30990 A1 (LG CHEM INVESTMENT LTD [KR]; MOON TAE SEOK [KR]; LEE JAE YOUNG [KR]; K) 18 April 2002 (2002-04-18) | 14,15,18 | |
| A | * the whole document * * in particular: abstract; page 2, line 18 - page 7, line 2; claims 1-22; figures 1-5; examples * | 1-13,16, 17 | |
| X | US 5 332 812 A (NICOLSON GARTH L [US] ET AL) 26 July 1994 (1994-07-26) | 14,15 | |
| A | * the whole document * * in particular: abstract; column 4, line 53 - column 5, line 15; claims 1-30; figures 1-8; examples * | 1-13, 16-18 | TECHNICAL FIELDS SEARCHED (IPC) |
| A | EP 0 903 152 A2 (MITSUBISHI CHEM CORP [JP]) 24 March 1999 (1999-03-24) * the whole document * | 1-18 | |

The present search report has been drawn up for all claims

| Place of search | Date of completion of the search | Examiner |
|---|---|---|
| Munich | 3 August 2016 | Ferreira, Roger |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 17 2254

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2016

| Patent document cited in search report | | Publication date | Patent family member(s) | | Publication date |
|---|---|---|---|---|---|
| WO 02081739 | A2 | 17-10-2002 | EP | 1409728 A2 | 21-04-2004 |
| | | | WO | 02081739 A2 | 17-10-2002 |
| US 2015045573 | A1 | 12-02-2015 | AU | 2014306021 A1 | 28-01-2016 |
| | | | CA | 2919088 A1 | 12-02-2015 |
| | | | CN | 105451743 A | 30-03-2016 |
| | | | EA | 201690051 A1 | 30-06-2016 |
| | | | EP | 3030244 A1 | 15-06-2016 |
| | | | KR | 20160035081 A | 30-03-2016 |
| | | | SG | 11201600379T A | 26-02-2016 |
| | | | TW | 201601742 A | 16-01-2016 |
| | | | US | 2015045573 A1 | 12-02-2015 |
| | | | WO | 2015021092 A1 | 12-02-2015 |
| WO 02082078 | A2 | 17-10-2002 | EP | 1448991 A2 | 25-08-2004 |
| | | | WO | 02082078 A2 | 17-10-2002 |
| WO 0218450 | A1 | 07-03-2002 | AT | 272654 T | 15-08-2004 |
| | | | AU | 1387002 A | 13-03-2002 |
| | | | AU | 2002213870 B2 | 03-11-2005 |
| | | | CA | 2423384 A1 | 07-03-2002 |
| | | | DE | 60104703 D1 | 09-09-2004 |
| | | | DE | 60104703 T2 | 14-07-2005 |
| | | | EP | 1313772 A1 | 28-05-2003 |
| | | | ES | 2227297 T3 | 01-04-2005 |
| | | | IT | PD20000207 A1 | 28-02-2002 |
| | | | JP | 2004507588 A | 11-03-2004 |
| | | | US | 7125860 B1 | 24-10-2006 |
| | | | WO | 0218450 A1 | 07-03-2002 |
| WO 0001733 | A1 | 13-01-2000 | AT | 297413 T | 15-06-2005 |
| | | | AU | 761986 B2 | 12-06-2003 |
| | | | AU | 4639799 A | 24-01-2000 |
| | | | CA | 2339066 A1 | 13-01-2000 |
| | | | DE | 69925733 D1 | 14-07-2005 |
| | | | DE | 69925733 T2 | 16-03-2006 |
| | | | DK | 1095064 T3 | 03-10-2005 |
| | | | EP | 1095064 A1 | 02-05-2001 |
| | | | EP | 1589036 A1 | 26-10-2005 |
| | | | ES | 2244198 T3 | 01-12-2005 |
| | | | IL | 140604 A | 16-06-2010 |
| | | | IT | PD980169 A1 | 07-01-2000 |
| | | | JP | 4791921 B2 | 12-10-2011 |
| | | | JP | 2002519481 A | 02-07-2002 |
| | | | JP | 2007031721 A | 08-02-2007 |
| | | | JP | 2011174079 A | 08-09-2011 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**     EP 16 17 2254

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2016

| Patent document cited in search report | | Publication date | Patent family member(s) | | Publication date |
|---|---|---|---|---|---|
| | | | PT | 1095064 E | 31-10-2005 |
| | | | SI | 1095064 T1 | 31-12-2005 |
| | | | US | 7884087 B1 | 08-02-2011 |
| | | | US | 2010158796 A1 | 24-06-2010 |
| | | | WO | 0001733 A1 | 13-01-2000 |
| WO 0230990 | A1 | 18-04-2002 | AU | 9432001 A | 22-04-2002 |
| | | | BR | 0114561 A | 26-08-2003 |
| | | | CN | 1468262 A | 14-01-2004 |
| | | | EP | 1328552 A1 | 23-07-2003 |
| | | | JP | 4230767 B2 | 25-02-2009 |
| | | | JP | 2004511588 A | 15-04-2004 |
| | | | KR | 20020028435 A | 17-04-2002 |
| | | | US | 2004014960 A1 | 22-01-2004 |
| | | | WO | 0230990 A1 | 18-04-2002 |
| US 5332812 | A | 26-07-1994 | AU | 609386 B2 | 02-05-1991 |
| | | | AU | 6987087 A | 17-09-1987 |
| | | | DK | 122087 A | 04-12-1987 |
| | | | EP | 0244932 A2 | 11-11-1987 |
| | | | FI | 871039 A | 11-09-1987 |
| | | | NO | 870977 A | 11-09-1987 |
| | | | US | 4859581 A | 22-08-1989 |
| | | | US | 5332812 A | 26-07-1994 |
| EP 0903152 | A2 | 24-03-1999 | AT | 253942 T | 15-11-2003 |
| | | | CA | 2247764 A1 | 17-03-1999 |
| | | | CN | 1214348 A | 21-04-1999 |
| | | | DE | 69819644 D1 | 18-12-2003 |
| | | | DE | 69819644 T2 | 07-10-2004 |
| | | | EP | 0903152 A2 | 24-03-1999 |
| | | | EP | 1352662 A1 | 15-10-2003 |
| | | | ES | 2210635 T3 | 01-07-2004 |
| | | | US | 2002025312 A1 | 28-02-2002 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LAUDER, R.M.** *Complement Ther Med,* 2009, vol. 17, 56-62